# EUROPEAN PATENT APPLICATION

(11) **EP 2 708 418 A1**
(43) Date of publication of application: **19.03.2014**
(21) Application number: 12184160.5
(22) Date of filing: 13.09.2012
(51) Int. Cl.: B60R 3/00, B62D 33/063

(54) **Vehicle**

(71) Applicant: Ford Global Technologies, LLC, Dearborn, MI 48126 (US)
(72) Inventor: Yildrim, Nihat, Istanbul (TR); Ok, Savas, Istanbul (TR); Büyükköse, Hakan, Kocaeli (TR); Yildrim, Mustafa Kemal, Kocaeli (TR)
(74) Representative: Drömer, Hans-Carsten

(57) **Abstract**

A vehicle (10) is provided, which includes an engine compartment (23) positioned between at least two front wheels (22). Furthermore, the vehicle includes mudguards (17) positioned above the wheels (22) and a hinged driving cabin (21) positioned above the engine compartment (23) and the mudguards (17). According to this invention at least one of the mudguards (17) comprises a service step (11) on its top, suitable to stand on it.

## Description

The present invention relates to a vehicle with an engine compartment positioned between at least two front wheels. The vehicle includes mudguards positioned above the wheels and a hinged driver cabin positioned above the engine compartment and the mudguards.

This type of vehicles is known and widely used, particularly for the transport of goods. To carry out work in the engine compartment the driving cabin can be tilted so that the engine compartment becomes accessible for a mechanic. However, it is hard to find a safe foothold next to the opened engine compartment for a mechanic.

US 4,610,456 A discloses a service step for use on a two-wheel drive tractor of the wide front axle type. The step is mounted on a knee portion below the front axle.

It is an objective of the present invention to provide a vehicle with a tiltable driver compartment which includes an advantageous foothold for a mechanist carrying out work in the engine compartment.

According to the present invention, this objective is achieved by a vehicle as claimed in claim 1. The depending claims contain further developments of the invention.

An inventive vehicle includes at least two front wheels, an engine compartment positioned between the front wheels, mudguards positioned above the front wheels, a hinged driver cabin positioned above the engine compartment and the mudguards, and at least one service step that is so designed as to be suitable for standing on it. The at least one service step is located on top of a mudguard. In particular, a service step that is so designed as to be suitable for standing on it can be located on top of each of the mudguards of the front wheels.

The service step provides a convenient and safe foothold for a mechanic when servicing the engine. Thereby, the maintenance and the service of the engine of the vehicle can be improved in terms of ergonomics since access to the engine compartment will be easier and more comfortable. The increased ergonomics helps to reduce service time and to prevent occupational accidents. Crashes of mudguards caused by stepping on it can also be prevented.

In the context of the present invention, the service step and the mudguard may be mounted to same support structure. Thus, no additional support structure is necessary for holding the service step.

In a development of the present invention the service step may include a profile forming a platform, where the profile may advantageously be made of metal. By this measure, a simple and cost effective design becomes possible.

In a further development of the present invention the profile may include gutters. By this measure, a higher stiffness and rigidity can be achieved.

In a still further development of the present invention the profile may include holes. Water can drain through the holes so that the platform formed by the profile can be prevented from becoming slippery.

In a particular embodiment of the present invention the profile may be mounted to the support structure by use of adapters. Adapters allow mounting the same type of profile to different support structures. Moreover, adapters also allow reducing storage costs since only different adapters need to be stored instead of a large number mounting steps with different mounting means. The profile may be fixed on the adapters by bolts and weld nuts whereby a very fast and economical assembly is possible. The adapters may be welded to the support structure.

Further features, properties and advantages of the present invention will become clear from the following description of embodiments in conjunction with the accompanying drawings.
- Figure 1: shows a service step on a mudguard of a vehicle in a perspective view.
- Figure 2: shows the mudguard of Figure 1 with the service step in an exploded view.
- Figure 3: shows a vehicle with the driver cabin tilted and service steps on the mudguards of the front wheels.

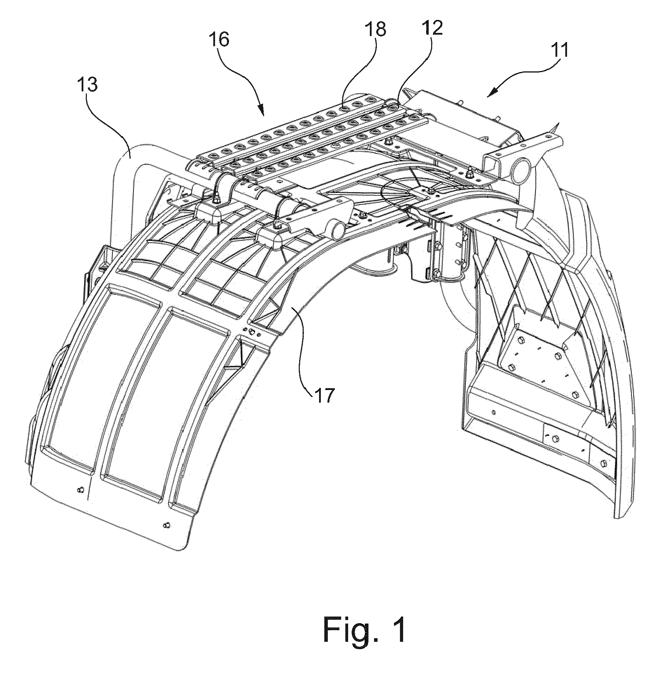

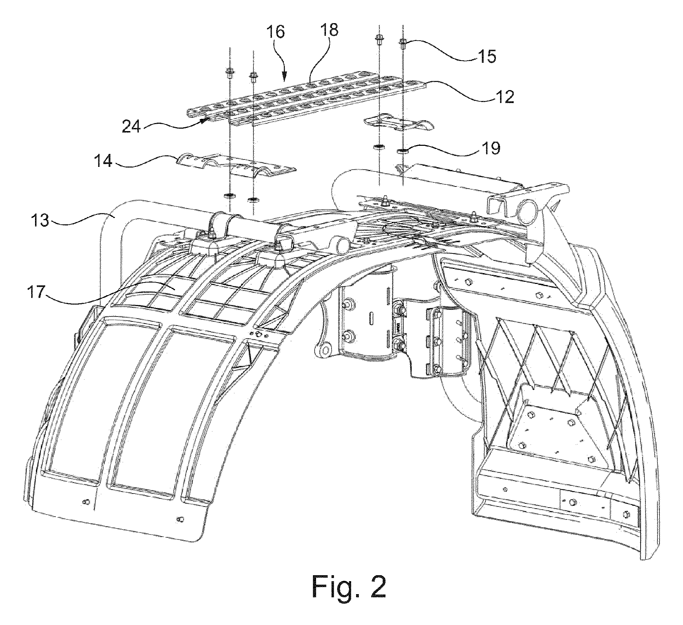

The present invention will now be described, by way of example, with reference to the accompanying drawings, in which Fig. 1 shows a mudguard 17 including a service step 11 positioned on the mudguard 17 and Fig. 2 shows the mudguard 17 and an exploded view of the service step 11 in more detail.

In the shown embodiment, the service step 11 comprises a metal profile 12 which forms a platform 16 suitable for standing on it. Width and length of the profile 12 is designed according to feet of a standard person. The profile 12 includes gutters 24 to achieve a higher rigidity of the platform 16. In addition, the gutters 24 generate more foothold for a mechanic. The profile 12 also includes holes 18 through which water can drain. This prevents the formation of puddles on the platform 16 which could make the platform slippery. Moreover, the holes 18 also increase the foothold.

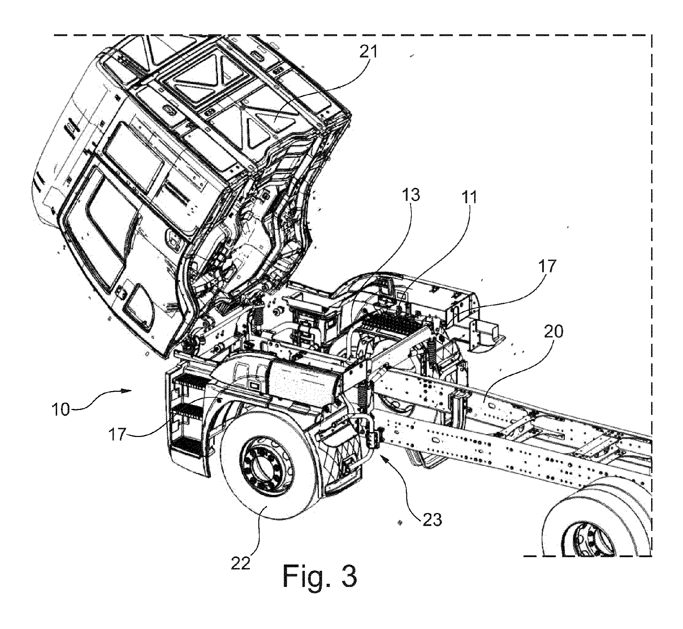

In the present embodiment, the service step 11 is fixed to the support structure that also holds the mudguard 17 and the wheel house liner, e.g. to support arms 13. The support arms 13, which are formed by tube brackets in the present embodiment, connect the mudguard 17 and the wheel house liner to a vehicle frame 20, as shown in Fig. 3. The service step 11 is fixed the tube brackets 13.

The service step 11 of the present embodiment also includes adapters 14 which are located between the tube brackets 13 and the profile 12. The profile 12 is fixed to the adapters 14 by means of bolts 15 and weld nuts 19. Although the profile 12 is fixed to the adapters 14 by means of bolts 15 and weld nuts 19 in the present embodiment other means for fixing the service step 11 to the adapters are also feasible, for example rivets or screws.

The adapters 14 are implemented as sheet metal brackets and are welded to the tube brackets 13.

Fig. 3 shows an embodiment of the inventive vehicle 10 with a service step 11. The vehicle includes a driver cabin 21, a frame 20, and at least four wheels 22 (which are not all visible in Figure 3). An engine compartment 23 is disposed between the two front wheels 22 of the vehicle 10. The driver cabin 21 is located above the engine compartment 23. To allow reaching the engine compartment 23 the driving cabin 21 can be tilted forward about a hinge, as it is shown in Fig. 3. The service step 11 can also be reached after the driving cabin 21 has been tilted forward.

The service step 11 is positioned above a front wheel 22 on the top of the respective mudguard 17, which also forms the wheel house. It is advantageous if a service step 11 is present on top of each mudguard 17 of a front wheel 22.

The mudguards 17 and the service steps 11 are fixed to the frame 20 of the vehicle 10 by means of tube brackets 13, as described above.

### List of reference numerals

- 10: Vehicle
- 11: Service Step
- 12: Profile
- 13: Tube Bracket
- 14: Adapter
- 15: Bolts
- 16: Platform
- 17: Mudguard
- 18: Holes
- 19: Weld Nuts
- 20: Frame
- 21: Driver Cabin
- 22: Wheel
- 23: Engine Compartment
- 24: Gutter

## Claims

1. A vehicle (10) including at least two front wheels (22), an engine compartment (23) positioned between the front wheels (22), mudguards (17) positioned above the front wheels (22), a hinged driver cabin (21) positioned above the engine compartment (23) and the mudguards (17), and at least one service step (11) that is so designed as to be suitable for standing on it, wherein the at least one service step (11) is located on top of a mudguard (17).

2. The vehicle (10) as claimed in claim 1, wherein the service step (11) and the mudguard (17) are mounted to the same support structure (13).

3. The vehicle (10) as claimed in claim 1 or 2, wherein the service step (11) comprises a profile (12) to form a platform (16).

4. The vehicle (10) as claimed in claim 3, wherein the profile (12) includes gutters (24).

5. The vehicle (10) as claimed in claim 3 or 4, wherein the profile (12) includes holes (18).

6. The vehicle (10) as claimed in any of the claims 3 to 5, wherein the profile (12) is connected to a support structure (13) by means of adapters (14).

7. The vehicle (10) as claimed in claim 6, wherein the adapters (14) are welded to the support structure (13).

8. The vehicle (10) as claimed in claim 6 or claim 7, wherein the profile (12) is fixed to the adapters (14) by bolts (15) and weld nuts (19).

9. The vehicle as claimed in any one of the preceding claims, wherein a service step (11) that is so designed as to be suitable for standing on it is located on top of each of the mudguards (17) of the front wheel s.
